# FASCICULE DE BREVET EUROPEEN

(11) **EP 4 076 864 B1**
(45) Date de publication et mention de la délivrance du brevet: **31.01.2024**
(21) Numéro de dépôt: 20824938.3
(22) Date de dépôt: 15.12.2020
(51) Int. Cl.: B25J 9/10, B25J 13/08, B25J 15/00, B25J 19/00

(54) **MAIN ROBOTIQUE SENSIBLE EN EFFORTS EN MILIEU AQUATIQUE**
ROBOTERHAND, DIE EMPFINDLICH AUF KRÄFTE IN EINER AQUATISCHEN UMGEBUNG REAGIERT
ROBOTIC HAND SENSITIVE TO FORCES IN AN AQUATIC ENVIRONMENT

(30) Priorité: 17.12.2019 FR 1914606
(43) Date de publication de la demande: 26.10.2022
(73) Titulaire: Centre national de la recherche scientifique, 75016 Paris (FR); Université de Poitiers, 86000 Poitiers (FR)
(72) Inventeur: GAZEAU, Jean-Pierre, 86100 Chatellerault (FR); LAGUILLAUMIE, Pierre, 86180 Buxerolles (FR); VULLIEZ, Philippe, 86800 Lavoux (FR); MIZERA, Camille, 86000 Poitiers (FR)
(74) Mandataire: Hautier IP
(86) Numéro de dépôt international: PCT/EP2020/086291
(87) Numéro de publication internationale: WO 2021/122648

(56) Documents cités:
- WO-A1-2014/009192
- JOHANNES LEMBURG ET AL: "A small-scale actuator with passive-compliance for a fine-manipulation deep-sea manipulator", OCEANS 2011, IEEE, 19 septembre 2011 (2011-09-19), pages 1-4, XP032075751, ISBN: 978-1-4577-1427-6

## Description

La présente invention concerne le domaine des mains robotiques utilisées en milieu aquatique, en particulier en grande profondeur, et pour la préhension d'objets fragiles.

### Etat de la technique antérieure

La réalisation de doigts ou de mains robotiques est un enjeu crucial dans beaucoup de domaines.

On connaît du document FR 3 027 246, une main robotique comprenant quatre doigts robotiques, dont un pouce, chaque doigt présentant plusieurs articulations, chacune étant actionnée au moyen d'un système de câbles et de poulies et par un actionneur électrique. La main robotique ainsi développée possède quatre actionneurs par doigt. Au regard de l'état de la technique antérieure, cet agencement permet de diminuer le nombre d'actionneurs nécessaire pour mettre en mouvement les doigts et ainsi réduire la masse et l'encombrement des mains robotiques.

Or ce type de dispositif n'est utilisable qu'en milieu aérien et/ou terrestre uniquement.

En milieu marin, il est connu des manipulateurs de différents types, par exemple :
- du type comprenant une pince formée par deux mors à actionnement par vérin, ce manipulateur pouvant être utilisé à une profondeur de 300 mètres,
- du type comprenant une pince dont les mors sont réalisés par un matériau mou et creux pouvant être actionné pneumatiquement ou par un matériau souple renforcé par des fibres pouvant être actionné hydrauliquement, ce type de manipulateur pouvant être utilisé à une profondeur de 100 mètres,
- du type comprenant une pince formée par trois mors à actionnement hydraulique, comprenant des jauges de contrainte disposées sur les phalanges de doigt, en particulier à l'extrémité d'un doigt, afin d'estimer directement une force de serrage, ce type de manipulateur ne mesurant pas la position des articulations,
- du type comprenant une pince formée par deux mors, chacun étant relié au bâti par l'intermédiaire d'un bras, chaque bras étant actionné par un premier moteur de manière à pouvoir à la fois pivoter et se translater le long d'une tringle fixée au bâti, chaque mors étant actionné par un deuxième moteur porté ledit bras de manière à pivoter relativement à une extrémité dudit bras, chaque mors comprenant trois capteurs optoélectroniques alignés sur la surface dudit mors afin de mesurer une force normale de compression, chaque mors étant recouvert d'une membrane de manière qu'une huile est emprisonnée entre le mors et la membrane, ce manipulateur pouvant être utilisé à une profondeur de 100 mètres.

Cependant, ces types de manipulateur ne sont utilisables qu'à faible profondeur, et sont pilotés en position par un opérateur via un retour visuel par caméra. Dans le cas où il n'y a aucun capteur ou jauge de déformation, l'opérateur ne peut pas contrôler la force de serrage. Dans le cas où le manipulateur est équipé de capteurs ou de jauges de déformation, ceux-ci ou celles-ci ne permettent pas de réaliser une mesure fiable de la force de serrage du fait de la pression exercée par le milieu extérieur à de plus grandes profondeurs en particulier lors de l'accroissement de pression.

En milieu marin, en particulier en grande profondeur, il est connu un manipulateur du type comprenant un bras articulé à l'extrémité duquel se trouve une pince formée par deux mors, l'ensemble étant actionné hydrauliquement, des potentiomètres étant agencés près des articulations pour acquérir leur position. Ce type de manipulateur est prévu pour des profondeurs allant jusqu'à 6000 mètres. De même, ce manipulateur est piloté via un retour visuel par caméra, de sorte qu'il n'est pas possible de contrôler la force de serrage.

Or contrôler la force de serrage d'un objet est primordial, en particulier lors de fouilles archéologiques.

Il est ainsi souhaitable de réaliser un agencement de main robotique permettant la préhension d'objets fragiles en milieu aquatique, en particulier en grande profondeur.

En particulier, un but de l'invention est de contrôler et/ou fiabiliser la mesure de l'effort de serrage par une main robotique en milieu aquatique.

Un but de l'invention est aussi à la fois de réduire la masse et l'encombrement d'une main robotique et de contenir l'encombrement de ladite main de manière à ressembler le plus possible à une main humaine et en faciliter l'utilisation par un humain. Un autre but de l'invention est de simplifier l'actionnement des mains robotiques. On connaît, par ailleurs, d'autres mains robotiques telles que celles décrites dans le document « A small-scale actuator with passive-compliance for a fine-manipulation deep-sea manipulator » (Hohannes Lemburg et AL, OCEANS 2011, IEEE, 19 septembre 2011qui présente une main robotique à doigts articulés recouverte d'un gant rempli d'huile afin de faciliter son utilisation sous-marine, et dans le document WO 2014/009192, qui présente un actionnement à câble associé à des capteurs de position sur le moteur en amont du câble et sur l'élément actionné en aval du câble.

### Exposé de l'invention

Selon un premier aspect de l'invention, on atteint au moins l'un des buts précités avec un dispositif formant une main robotique comprenant :
- une embase formant une paume de main,
- au moins deux structures articulées formant chacune un doigt robotique, chaque structure articulée étant reliée fonctionnellement à l'embase et comprenant au moins une articulation, de manière à mettre en mouvement ladite structure articulée par rapport à l'embase,
- au moins un mécanisme d'entraînement pour mettre en mouvement chaque articulation,
- au moins un actionneur agencé pour actionner l'au moins un mécanisme d'entraînement au moyen au moins d'un lien souple d'entraînement reliant et entraînant l'au moins un mécanisme d'entraînement,
- des moyens de mesure du pivotement de l'au moins un actionneur et d'une ou de plusieurs desdites articulations,
- un gant recouvrant l'embase et les au moins deux structures articulées, le gant étant fermé de manière à former, à l'intérieur dudit gant, un volume rempli d'huile entre la paroi du gant et l'embase et les au moins deux structures articulées.

Le dispositif selon l'invention a pour avantage de pourvoir contrôler la force de serrage en grande profondeur (2000 mètres) et ainsi pourvoir saisir des objets très fragiles. Il permet en outre de réduire significativement l'encombrement et la masse d'une main robotique et à la fois d'améliorer son esthétisme de manière à ressembler à une main humaine. La main robotique ainsi proposée est plus efficiente que les mains robotiques de l'art antérieur.

Pour ce qui précède et/ou pour la suite de la description, on entend par :
- structure articulée, un élément de structure relié à l'embase par une articulation, ou un ensemble d'éléments de structure reliés l'un à la suite de l'autre par une articulation et un élément de structure parmi l'ensemble d'éléments de structure relié à l'embase par une articulation, chaque élément étant agencé et configuré pour former une phalange d'un doigt robotique, une structure articulée formant un doigt robotique ; par la suite, on pourra utiliser indifféremment structure articulée ou doigt,
- élément de structure, une pièce reliant deux articulations par ses deux extrémités opposées, ou une pièce reliant une articulation par une de ses deux extrémités opposées, l'élément de structure pouvant être de forme longiligne de manière à réaliser une phalange d'un doigt robotique,
- articulation, une liaison mécanique réalisant au moins un mouvement de rotation relative entre deux éléments de structure ou entre l'embase et un élément de structure,
- deux articulations de différents types et/ou de différentes fonctions, deux liaisons mécaniques distinctes, une première liaison mécanique et une deuxième liaison mécanique, réalisant chacune au moins un mouvement de rotation relative entre deux éléments de structure ou entre l'embase et un élément de structure,
- différents types d'articulation, des articulations présentant comme différence un axe de rotation différent, par exemple des axes de rotation non parallèles entre eux, ou des axes de rotation orthogonaux entre eux,
- différentes fonctions d'articulation, des articulations définies par des positions espacées l'une de l'autre, par exemple séparées par un élément de structure, de sorte que, dans le cadre de deux articulations, la première articulation réalise une première fonction, dite fonction de première flexion, et la deuxième articulation réalise une deuxième fonction, dite fonction de deuxième flexion,
- un lien souple, un lien structurel présentant la forme d'un câble ou d'une courroie,
- un lien souple d'actionnement, un lien structurel présentant la forme d'une courroie et n'étant pas élastique,
- un lien souple d'entraînement, un lien structurel présentant la forme d'un câble et étant élastique.

De préférence, les moyens de mesure comprennent un codeur incrémental, ou capteur optique, disposé sur chaque actionneur. Chaque capteur permet de mesurer une position angulaire de l'axe de rotation de l'actionneur. Les moyens de mesure comprennent un potentiomètre disposé sur chaque axe d'articulation. Chaque potentiomètre permet de mesurer une position angulaire entre deux phalanges ou entre l'embase et une première phalange. Le potentiomètre est du type agencé pour renvoyer un signal électrique dépendant de la position de ladite articulation. La différence entre la mesure des potentiomètres et la mesure des codeurs incrémentaux (ou capteurs optiques) permet d'obtenir l'allongement des liens souples (par exemple des câbles). En identifiant chaque lien souple à un ressort et connaissant la constante d'élasticité (ou module d'élasticité) dudit lien souple, il est possible de calculer l'effort supporté par chaque lien souple par l'équation suivante : F=k.x ; F étant l'effort supporté par le lien souple, k la constante d'élasticité, x l'allongement du lien souple.

Le calcul des efforts de serrage sera décrit davantage par la suite.

Ces moyens de mesure ont pour avantages d'être simple et fiable. En outre, comme les doigts et les potentiomètres sont plongés dans l'huile qui permet de compenser la pression du milieu aquatique, aucune pression supplémentaire ne viendra s'appliquer sur les phalanges des doigts, dès lors que la pression interne et externe est identique de sorte que les mesures de serrage des doigts seront également fiables.

Selon un mode de réalisation, le gant est réalisé avec un matériau contenant du silicone. Le gant peut être constitué majoritairement ou entièrement en élastomère silicone. La silicone permet d'augmenter l'adhérence entre les bouts des doigts et les objets. De préférence, la paroi du gant présente une épaisseur de deux millimètres. De préférence, la paroi du gant présente une dureté Shore A comprise entre 10 et 40, de manière préférentielle de 20. Ce choix offre un compromis entre étanchéité et souplesse de manière à permettre le mouvement des doigts sans contrainte.

De préférence, le dispositif comprend au moins une coque présentant une forme arrondie et placée entre chaque articulation de l'au moins une structure articulée, de manière à réaliser localement un support pour la paroi du gant. Selon un mode de réalisation, une coque est disposée sur chaque phalange. De manière préférentielle, l'au moins une coque est rigide. Elle peut être réalisée en au moins deux parties pouvant s'assembler autour d'une phalange, par exemple par vissage ou emboîtage.

Selon des perfectionnements optionnels de l'invention :
- au moins un arbre intermédiaire d'entraînement afin de renvoyer le mouvement de l'au moins un actionneur, disposé fonctionnellement entre l'au moins un actionneur et l'au moins un mécanisme d'entraînement actionné, de façon que :
- l'au moins un arbre intermédiaire d'entraînement est actionné par un actionneur, et
- l'au moins un arbre intermédiaire d'entraînement est relié fonctionnellement à au moins deux mécanismes d'entraînement distincts, chaque mécanisme d'entraînement étant relié fonctionnellement audit arbre intermédiaire d'entraînement au moyen de l'au moins un lien souple d'entraînement,
- au moins un arbre intermédiaire d'entraînement est relié fonctionnellement à au moins deux mécanismes d'entraînement, chaque mécanisme étant disposé fonctionnellement sur une structure articulée distincte ; cette caractéristique permet de synchroniser deux articulations de deux structures articulées distinctes,
- les au moins deux structures articulées comprennent chacune au moins deux éléments de structure et au moins deux articulations de différents types et/ou de différentes fonctions, qui sont reliés fonctionnellement ensemble pour former un doigt robotique à au moins deux articulations, l'au moins un arbre intermédiaire d'entraînement étant relié fonctionnellement à au moins deux mécanismes d'entraînement associés à une articulation de même type et/ou fonction, chaque mécanisme étant disposé sur une structure articulée distincte ; cette caractéristique permet de synchroniser deux articulations de même type d'au moins deux structures articulées distinctes,
- les au moins deux structures articulées sont sensiblement identiques et comprennent chacune au moins deux éléments de structure et au moins deux articulations de différents types et/ou de différentes fonctions, qui sont reliés fonctionnellement ensemble pour former un doigt robotique à au moins deux d'articulations, l'ensemble des au moins deux structures articulées définissant au moins deux rangs d'articulations de même type et/ou de même fonction, l'au moins un arbre intermédiaire d'entraînement étant relié fonctionnellement à au moins deux mécanismes d'entraînement associés à une articulation de même rang, chaque mécanisme étant disposé sur une structure articulée distincte ; cette caractéristique permet de synchroniser deux articulations de même rang d'au moins deux structures articulées distinctes,
- les au moins deux structures articulées comprennent chacune au moins deux éléments de structure et au moins deux articulations de différents types et/ou de différentes fonctions, qui sont reliés fonctionnellement ensemble pour former un doigt robotique à au moins deux articulations, et les au moins deux articulations sont couplées l'une à l'autre au moyen d'un lien souple de raccordement, de préférence les au moins deux articulations sont consécutives ; cette caractéristique permet de simplifier l'entraînement des articulations,
- l'au moins un actionneur est associé à un seul arbre intermédiaire d'entraînement,
- l'au moins un actionneur comprend un axe de rotation qui est parallèle et non coaxial avec l'axe de l'au moins un arbre intermédiaire d'entraînement, de façon que chaque arbre intermédiaire d'entraînement est actionné par un actionneur au moyen d'au moins un lien souple d'actionnement,
- le dispositif comprend au moins deux actionneurs, un premier actionneur et un deuxième actionneur, agencés parallèlement et l'un à côté de l'autre, dont le deuxième actionneur présente un arbre de rotation débouchant d'un côté opposé à celui du premier actionneur ; cette caractéristique permet de limiter d'autant plus l'encombrement du dispositif formant main robotique,
- le dispositif formant une main robotique comprend quatre structures articulées formant quatre doigts robotiques, en particulier quatre doigts robotiques disposés par rapport à l'embase de manière à ce que trois doigts robotiques puissent être sensiblement alignés entre eux et parallèles au plan géométrique passant par l'embase, de préférence un des quatre doigts robotiques forme un pouce,
- le dispositif formant une main robotique comprend exactement deux actionneurs pour actionner respectivement deux arbres intermédiaires d'entraînement de manière à entraîner respectivement deux rangs d'articulations, de préférence deux rangs d'articulations d'au moins trois structures articulées, dont un pouce ; cette caractéristique permet de synchroniser le mouvement de toutes les structures articulées, par exemple pour saisir des pièces cylindriques,
- le dispositif formant la main robotique comprend exactement six actionneurs pour actionner respectivement six arbres intermédiaires d'entraînement de manière à entraîner respectivement trois rangs d'articulations d'au moins trois structures articulées formant au moins trois doigts robotiques hormis le pouce et trois articulations d'une structure articulée formant un pouce robotique,
- les moyens de mesure comprennent six codeurs incrémentaux,
- l'au moins une articulation est du type réalisant une liaison de pivotement autour d'un axe de flexion par rapport à l'embase, l'axe de l'au moins un arbre intermédiaire étant sensiblement parallèle à l'axe de flexion de l'au moins une articulation,
- l'au moins un arbre intermédiaire d'entraînement comprend au moins une poulie d'entraînement et l'au moins un mécanisme d'entraînement comprend au moins une poulie de réception, de façon que l'au moins un lien souple d'entraînement est relié auxdites poulies,
- l'au moins un arbre intermédiaire d'entraînement et/ou l'au moins une poulie d'entraînement et/ou l'au moins une poulie de réception et/ou tout autre élément tournant peut être monté sur un roulement de manière à limiter les frottements,
- le dispositif comprend un support d'actionnement sur lequel l'au moins un actionneur et l'au moins un arbre intermédiaire d'entraînement sont fixés, le support étant relié fonctionnellement à l'embase,
- l'au moins un actionneur et l'au moins un arbre intermédiaire d'entraînement sont insérés et/ou fixés dans l'embase,
- l'au moins un actionneur est un moteur électrique.

Selon un second aspect de l'invention, il est prévu un robot comprenant au moins un bras articulé, lequel comprend au moins un dispositif formant une main robotique selon l'une plusieurs des caractéristiques du premier aspect de l'invention.

### Description des figures et des modes de réalisation

D'autres caractéristiques et avantages de l'invention apparaîtront à la lecture de la description détaillée de mises en oeuvre et de modes de réalisation nullement limitatifs, au regard de figures annexées sur lesquelles :
[Fig.1] la Figure 1 est un schéma cinématique de quatre structures articulées, formant chacune un doigt robotique, reliées à une embase d'un dispositif formant une main robotique selon un mode de réalisation ;
[Fig.2] la Figure 2 est une vue en perspective d'une embase et de quatre structures articulées, formant chacune un doigt robotique, reliées à une embase d'un dispositif formant une main robotique conformes à la Figure 1 ;
[Fig.3] la Figure 3 est une vue en perspective d'un dispositif formant une main robotique selon un mode de réalisation comprenant quatre structures articulées, formant chacune un doigt robotique, reliées à une embase conformes aux Figures 1 et 2, et un support destiné à comprendre des actionneurs et des arbres intermédiaires d'entraînement, le support étant relié à l'embase de manière à former un avant-bras ;
[Fig.4] la Figure 4 est une vue en perspective d'un dispositif formant une main robotique conforme à la Figure 3, le support étant partiellement représenté et vu par transparence de manière à distinguer une partie des actionneurs, des arbres intermédiaires d'entraînement, des liens souples d'actionnement entre lesdits actionneurs et lesdits arbres et des liens souples d'entraînement entre lesdits arbres et l'embase selon un mode de réalisation;
[Fig.5] la Figure 5 est une vue de dessus d'un support comprenant deux actionneurs disposés tête bêche et quatre arbres intermédiaires d'entraînement disposés parallèlement les uns par rapport aux autres ;
[Fig.6] la Figure 6 est une vue de gauche et horizontale d'un dispositif formant une main robotique conforme aux Figures 3 à 5, le support étant vu en transparence, lequel comprenant six actionneurs et six arbres intermédiaires d'entraînement, lesquels sont superposés selon trois étages : un premier étage, un deuxième étage et un troisième étage, comprenant respectivement deux actionneurs et deux arbres intermédiaires d'entraînement ;
[Fig.7] la Figure 7 est une vue de gauche d'un dispositif formant une main robotique représenté schématiquement et conforme à la Figure 6, représentant schématiquement le parcours de liens souples d'entraînement entre des arbres intermédiaires d'entraînement et des poulies de réception montées sur des articulations de structures articulées, en particulier destiné à commander l'abduction-adduction du pouce, et les flexions-extensions des autres doigts ;
[Fig.8] la Figure 8 est une vue de droite d'un dispositif formant une main robotique représenté schématiquement et conforme à la Figure 6, représentant schématiquement le parcours de liens souples d'entraînement entre des arbres intermédiaires d'entraînement et des poulies de réception montées sur des articulations de structures articulées, en particulier destiné à commander les flexions-extensions du pouce et l'abduction-adduction des autres doigts ;
[Fig.9] la Figure 9 est une vue de dessus du dispositif formant une main robotique conforme aux Figures 5 et 6, le support étant vu en transparence de manière à montrer uniquement le deuxième étage d'actionneurs et d'arbres intermédiaires d'entraînement ;
[Fig.10] la Figure 10 est une vue de dessus du dispositif formant une main robotique conforme aux Figures 5 et 6, le support étant vu en transparence de manière à montrer uniquement le premier étage d'actionneurs et d'arbres intermédiaires d'entraînement ;
[Fig.11] la Figure 11 est une vue de dessus du dispositif formant une main robotique conforme aux Figures 5 et 6, le support étant vu en transparence de manière à montrer uniquement le troisième étage d'actionneurs et d'arbres intermédiaires d'entraînement ;
[Fig.12] la Figure 12 est une vue en perspective de deux articulations et d'un élément de structure reliant les deux articulations, les deux articulations présentant des axes de rotation non parallèles entre eux, correspondant à des axes d'abduction-adduction et de flexion-extension ;
[Fig.13] la Figure 13 est une vue en perspective, selon un angle d'observation opposée à la Figure 12, de deux articulations et d'un élément de structure reliant les deux articulations, les deux articulations présentant des axes de rotation non parallèles entre eux, correspondant à des axes d'abduction-adduction et de flexion-extension ;
[Fig.14] la Figure 14 est une vue de dessus d'une structure articulée formant un doigt robotique comprenant quatre articulations, une articulation d'abduction-adduction et trois articulations de flexion-extension, et en particulier les poulies de réception du mécanisme d'entraînement et les liens souples coopérant avec celles-ci ;
[Fig.15] la Figure 15 est une vue en perspective d'un gant, selon un mode de réalisation, agencé pour recouvrir un dispositif formant une main robotique conformes aux figures précédentes ;
[Fig.16] la Figure 16 est une vue en perspective du dispositif formant une main robotique conformes aux figures précédentes, comprenant en outre un gant conforme à la Figure 15 ;
[Fig.17] la Figure 17 est une vue en perspective de deux articulations, dont une articulation est équipée d'un potentiomètre ;
[Fig.18] la Figure 18 est un graphique représentant l'évolution de la position angulaire d'une première phalange d'un premier doigt en fonction du temps, courbe A, et des moyennes quadratique des allongements, en millimètres, d'un premier doigt et d'un deuxième doigt, courbes B et C, en fonction du temps, de manière à illustrer un essai de saisie d'un objet par deux doigts par la méthode de mesure des allongements des liens souples.

### Description d'un exemple de mode de réalisation

Les modes de réalisation qui seront décrits dans la suite ne sont nullement limitatifs.

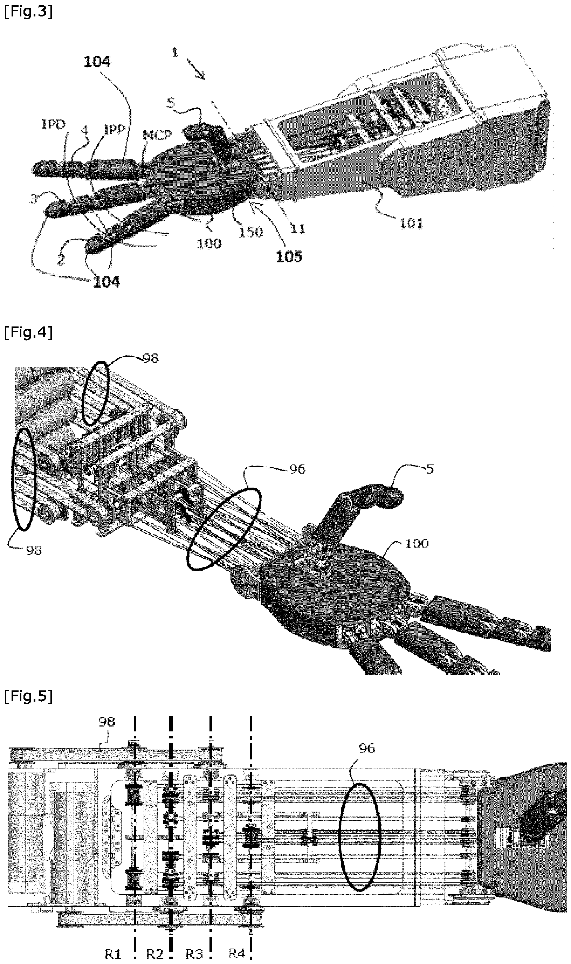

La figure 3 illustre un dispositif 1 formant une main robotique comprenant une embase 100 formant une paume, et quatre structures articulées 2, 3, 4 et 5 formant des doigts, chaque structure articulée étant reliée à l'embase de manière à réaliser une main robotique, ressemblant sensiblement à une main humaine. L'embase 100 présente une forme sensiblement rectangulaire, qui à une extrémité distale, présente trois doigts 2, 3, 4 disposés les uns à côté des autres, lesdits doigts, au repos comme représenté sur la figure 3, s'étendant dans le plan géométrique défini par l'embase. En comparaison avec la main humaine, les structures articulées ou doigts 2, 3 et 4 correspondent respectivement à l'index, le majeur et l'annulaire. L'embase 100 présente en outre, sur une face 150 de paume, une structure articulée 5 formant un pouce qui s'étend de manière sensiblement perpendiculaire à la face de paume de l'embase. Le dispositif 1 comprend en outre un support d'actionnement 101 recevant et renfermant des moyens d'actionnement et de transmission de mouvement qui seront décrits ci-dessous. Le support d'actionnement 101 est relié à une extrémité proximale de l'embase 100 par une articulation. Selon le mode de réalisation représenté, l'articulation entre l'embase 100 et le support d'actionnement 101 est une liaison mécanique de pivotement de flexion 11. Le support d'actionnement 101 réalise ainsi un avant-bras. Selon d'autres modes de réalisation non représentés, les moyens d'actionnement et de transmission de mouvement peuvent être insérés dans l'embase.

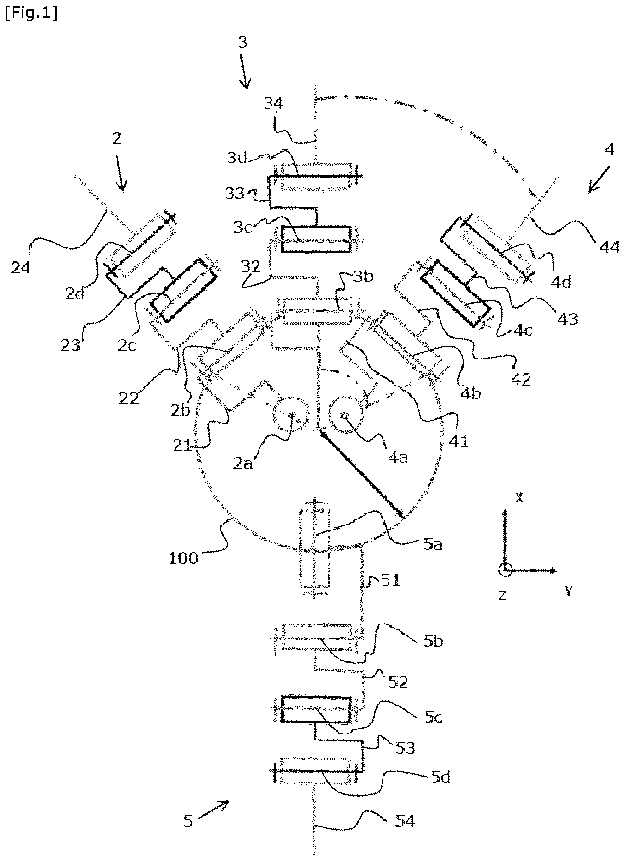

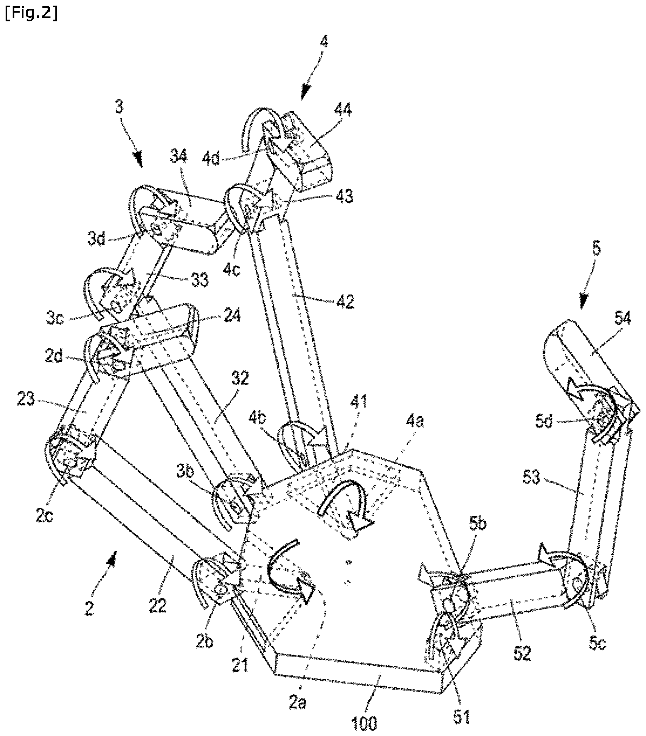

Les figures 1 et 2 illustrent les degrés de mobilité des structures articulées 2, 3, 4 et 5 par rapport à l'embase 100. Chaque structure articulée, ou doigt, comprend des éléments de structure reliés les uns aux autres par des articulations de manière à mettre en mouvement ladite structure articulée par rapport à l'embase. En particulier, chaque structure articulée comprend au moins une articulation définissant une liaison mécanique entre l'embase et ladite structure articulée. Chaque structure articulée comprend une succession alternée d'éléments de structure et d'articulations.

Il est prévu deux types d'élément de structure. Le dispositif prévoit d'une part des éléments de structure de liaison 21, 41 et 51 de manière à raccorder deux différents types d'articulation, et d'autre part des éléments de structure ergonomique de manière à former des phalanges. En référence aux figures 1 et 2, chaque doigt 2, 3, 4 et 5 comprend respectivement une première phalange 22, 32, 42, 52, une deuxième phalange 23, 33, 43, 53, et une troisième phalange 24, 34, 44, 54.

Le dispositif prévoit deux types d'articulations : des articulations de type abduction-adduction de manière à réaliser au moins un pivotement selon l'axe z (voir figure 1), et des articulations de type flexion-extension de manière à réaliser au moins un pivotement selon l'axe y (voir figure 1). Selon le mode de réalisation représenté, il est prévu quinze articulations pour mettre en mouvement les structures articulées par rapport à l'embase. Trois structures articulées disposent de quatre articulations : le pouce 5, l'index 2 et l'annulaire 4. Le majeur 3 dispose de trois articulations.

Selon les modes de réalisation représentés, le pouce 5, l'index 2 et l'annulaire 4 disposent chacun d'une articulation d'abduction-adduction 2a, 4a, 5a reliant l'embase 100 à une première extrémité proximale d'un élément de structure de liaison 21, 41, 51. Les articulations d'abduction-adduction 2a et 4a de l'index 2 et de l'annulaire 4, respectivement, sont positionnées près de l'extrémité distale de l'embase 100 (voir figure 2). Les deux articulations d'abduction-adduction définissent un rang d'articulations d'abduction-adduction. L'articulation d'abduction-adduction 5a est positionnée sur la face de paume 150, voir figure 3. Le majeur 3 ne dispose pas d'articulation d'abduction-adduction selon le mode de réalisation.

Chaque doigt 2, 4, 5 comprend une première articulation de flexion-extension 2b, 4b, 5b reliant l'extrémité distale de l'élément de structure de liaison 21, 41, 51 à une extrémité proximale d'une première phalange 22, 42, 52. Le majeur 3 comprend également une première articulation de flexion-extension 3b reliant l'extrémité distale de l'embase 100 à une extrémité proximale d'une première phalange 32. Les premières articulations de flexion-extension définissent un rang d'articulations métacarpo phalangienne MCP. En particulier, le rang d'articulations métacarpo phalangienne MCP comprend les premières articulations de flexion-extension 2b de l'index, 3b du majeur et 4b de l'annulaire, voir figure 3.

Ensuite, chaque doigt 2, 3, 4 et 5 comprend une deuxième articulation de flexion-extension 2c, 3c, 4c, 5c reliant l'extrémité distale de la première phalange 22, 32, 42, 52 à une extrémité proximale d'une deuxième phalange 23, 33, 43, 53. Les deuxièmes articulations de flexion-extension définissent un rang d'articulations interphalangienne proximale IPP. En particulier, le rang d'articulations interphalangienne proximale comprend les deuxièmes articulations de flexion-extension 2c de l'index, 3c du majeur et 4c de l'annulaire, voir figure 3.

Enfin, chaque doigt 2, 3, 4 et 5 comprend une troisième articulation de flexion-extension 2d, 3d, 4d, 5d reliant l'extrémité distale de la deuxième phalange 23, 33, 43, 53 à une extrémité proximale d'une troisième phalange 24, 34, 44, 54. Les troisièmes articulations de flexion-extension définissent un rang d'articulations interphalangienne distale IPD. En particulier, le rang d'articulations interphalangienne distale IPD comprend les troisièmes articulations de flexion-extension 2d de l'index, 3d du majeur, 4d de l'annulaire, voir figure 3.

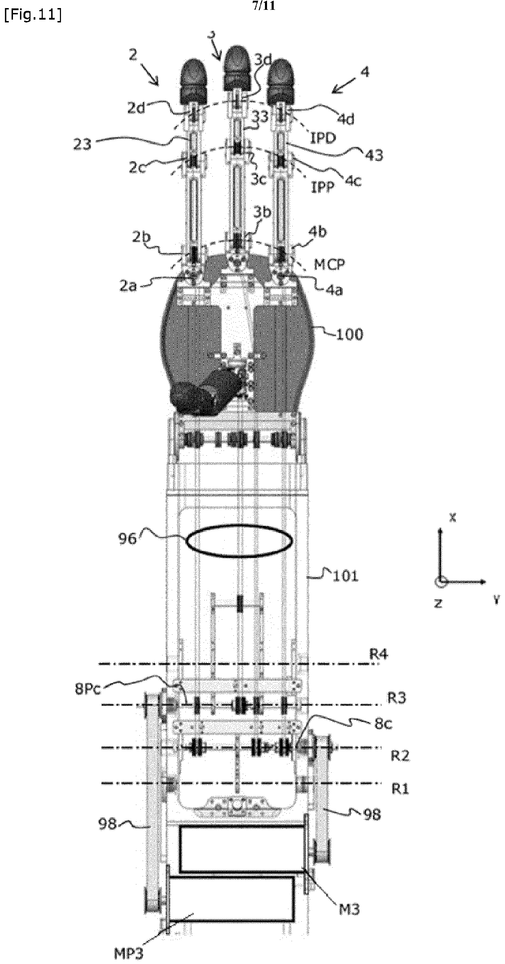

En référence à la figure 1, toutes les articulations sont des liaisons pivots. Concernant l'index 2 et l'annulaire 4, chaque articulation d'abduction-adduction 2a, 4a est réalisée par une liaison pivot d'axe z. Concernant le pouce 5, l'articulation d'abduction-adduction 5a est réalisée par une liaison pivot d'axe x. Concernant les doigts 3 et 5, chaque articulation de flexion-extension est réalisée par une liaison pivot d'axe y. Concernant les doigts 2 et 4, chaque articulation de flexion-extension est réalisée par une liaison pivot d'axe y, lorsque lesdits doigts, l'index 2 et l'annulaire 4, sont parallèles au majeur 3, comme représenté par exemple en figure 11.

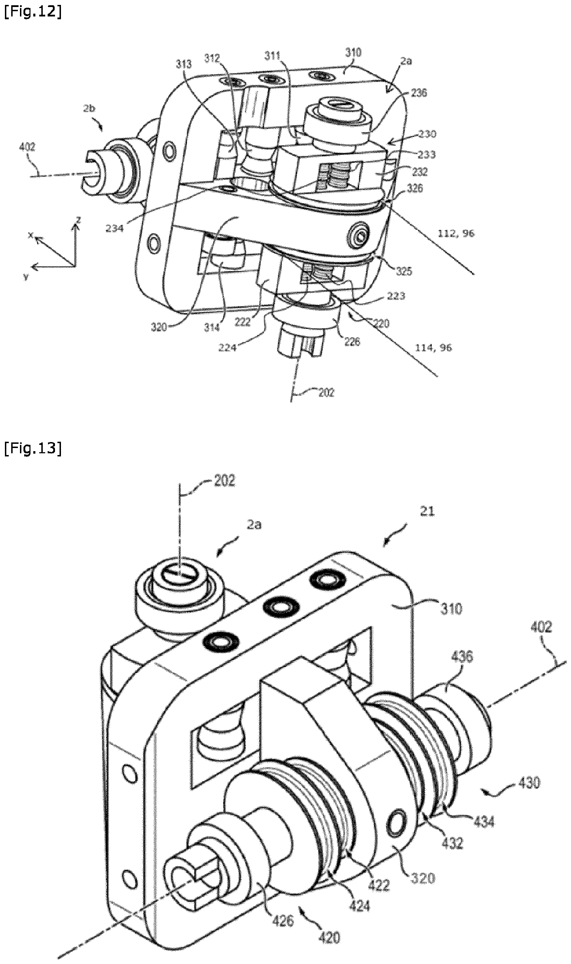

Le dispositif comprend des poulies de réception, dites aussi poulies réceptrices d'entraînement positionnées près des articulations de manière à mettre en mouvement de pivotement les éléments de structure les uns par rapport aux autres par l'intermédiaire de liens souples d'entraînement ou câbles, voir figures 12, 13 et 14. De préférence, chaque poulie de réception, ou poulie réceptrice d'entraînement présente une gorge de forme hélicoïdale. Cette caractéristique permet au lien souple, ou câble, de pouvoir faire un tour complet de ladite poulie sans que ledit lien souple, ou ledit câble, se superpose et ainsi permet de maintenir un diamètre d'enroulement constant autour de ladite poulie. Cette caractéristique permet en outre de limiter le frottement du lien souple par rapport à lui-même et/ou par rapport à la gorge de la poulie.

Les figures 12 et 13 montrent un élément de structure de liaison 21 portant une articulation d'abduction-adduction 2a et une articulation de flexion-extension 2b, du type prévu pour l'index. L'élément de structure de liaison est le même pour l'annulaire et le pouce. L'élément de structure de liaison 21 présente la forme d'un cadre support 310 dont le plan moyen s'étend, au repos c'est-à-dire en position centrée par rapport aux positions extrêmes d'abduction et d'adduction, dans un plan yz. Le cadre support 310 porte respectivement sur ses deux faces opposées de part et d'autre du plan moyen en yz, l'articulation 2a d'abduction-adduction dont l'axe de rotation s'étend selon l'axe z, et l'articulation 2b de flexion-extension dont l'axe de rotation s'étend selon l'axe y.

L'élément de structure de liaison comprend en outre un pontet 320 sur une première face du cadre support 310. Le pontet 320 présente la forme d'un dièdre dont le plan médian en épaisseur s'étend dans un plan en xy et qui supporte à rotation deux demi-arbres d'abduction-adduction 220, 230 agencés de manière coaxiale, dont l'axe de pivotement 202 s'étend parallèlement à l'axe z. Les demi-arbres 220, 230 sont maintenus immobiles par rapport au pontet 320. Les demi-arbres 220, 230 sont articulés par rapport à l'embase 100, par l'intermédiaire des roulements, ou paliers 226, 236, de sorte que l'élément de structure de liaison 21 pivote relativement à l'embase autour de l'axe 202. L'élément de structure de liaison 21 comprend des poulies de réception, dites aussi poulies réceptrices d'entraînement 325 et 326 agencées pour recevoir chacune un lien souple d'entraînement 96, de manière à ce que l'élément de structure de liaison 21 soit mis en mouvement de pivotement autour de l'axe 202 par adhérence du lien souple sur la poulie.

De préférence, les liens souples sont accrochés sur les poulies réceptrices 325, 326 par des points d'ancrage respectifs qui sont diamétralement opposés par rapport à l'axe 202.

En variante les liens souples d'entraînement peuvent être enroulés au moins partiellement autour des poulies 325, 326, voire faire un tour complet autour de ces poulies, dans des sens respectivement opposés, et leurs secondes extrémités sont fixées sur le pontet 320.

Dans les deux cas, la personne de l'art comprendra que le déplacement à rotation d'un actionneur dans un sens applique un effort de traction sur le premier câble adduction 114 et par action sur la poulie 325 et/ou le pontet 320 conduit à un déplacement du doigt dans une direction abduction-adduction (voir l'arc de cercle de la figure 1). Inversement le déplacement à rotation du même actionneur dans le sens inverse applique un effort de traction sur le deuxième câble abduction 112 et par action sur la poulie 326 et/ou le pontet 320 conduit à un déplacement du doigt dans une direction abduction-adduction.

Entre les poulies 325, 326 et les paliers 226, 236, chaque demi-arbre ou tourillon 220, 230 porte une cage 222, 232 définissant chacune une fenêtre pour le passage et le guidage de liens souples d'entraînement ou câbles 96, en particulier des couples de câbles 122, 124 ; 132, 134, dirigés vers les articulations avales 2b et 2c. Chaque cage 222, 232 possède deux séries de pièces tournantes cylindriques et présentant chacune une gorge, respectivement coaxiales, en forme de diabolo 223, 224 et 233, 234. Chaque série de pièces en forme de diabolo 223, 224 et 233, 234 est centrée sur un axe respectif en z. Les pièces en diabolo 223, 224 prévues dans la cage 222 sont symétriques par rapport à l'axe 202. De même les pièces en diabolo 233, 234 prévues dans la cage 232 sont symétriques par rapport à l'axe 202.

Chaque série de pièces en forme de diabolo 223, 224 et 233, 234 comporte par ailleurs un nombre de pièces en forme de diabolo égal au nombre de câbles à guider, respectivement 122, 132 et 124, 134.

Selon le mode de réalisation représenté sur la figure 12, chaque demi-arbre ou tourillon 220, 230 guide deux liens souples d'entraînement ou câbles 122, 132 et 124, 134. En conséquence chaque série de pièces 223, 224 et 233, 234 en forme de diabolo comporte au moins deux pièces en forme de diabolo empilées axialement en z. Sur l'axe 202 du mouvement d'abduction-adduction, il est donc prévu un jeu d'au moins quatre diabolos positionné sur la partie supérieure de l'axe pour guider au moins deux câbles et un jeu de quatre diabolos (en partie visible) sur la partie inférieure de l'axe pour guider deux câbles.

Chaque paire de deux diabolos adjacents appartenant aux deux séries de pièces 223, 224 et 233, 234 situées dans une cage commune 222, 232 définissent ainsi des passages respectifs destinés à recevoir les liens souples d'entraînement destinés à mettre en mouvement les poulies réceptrices. Chaque câble est ainsi guidé entre deux diabolos tournants.

Chaque diabolo est susceptible de rotation autour de son axe, sur une tige d'articulation centrale liée à la cage 222 ou 232, pour limiter les frictions entre les câbles et les diabolos.

Après leur passage à travers l'articulation 2a d'abduction-adduction, chacun des liens souples d'entraînement ou câbles est ainsi guidé via une pièce en forme de diabolo 311, 312, 313 et 314 vers l'axe de l'articulation 2b de flexion-extension, voir figure 12.

En référence à la figure 13, l'élément de structure de liaison 21 comprend un pontet 320 sur une deuxième face du cadre support 310. Le pontet 320 présente la forme d'un dièdre dont le plan médian en épaisseur s'étend dans un plan en xz et qui supporte à rotation deux demi-arbres de flexion-extension 420 et 430 coaxiaux s'étendant selon un axe de flexion-extension 402 de l'articulation 2b de flexion-extension, qui est parallèle à l'axe y, et qui est orthogonale à l'axe d'abduction-adduction 202. Les deux demi-arbres de flexion-extension 420, 430 sont reliés de manière fixe en rotation par rapport au pontet 320. Les deux demi-arbres ou tourillons 420, 430 sont situés respectivement de part et d'autre du pontet 320.

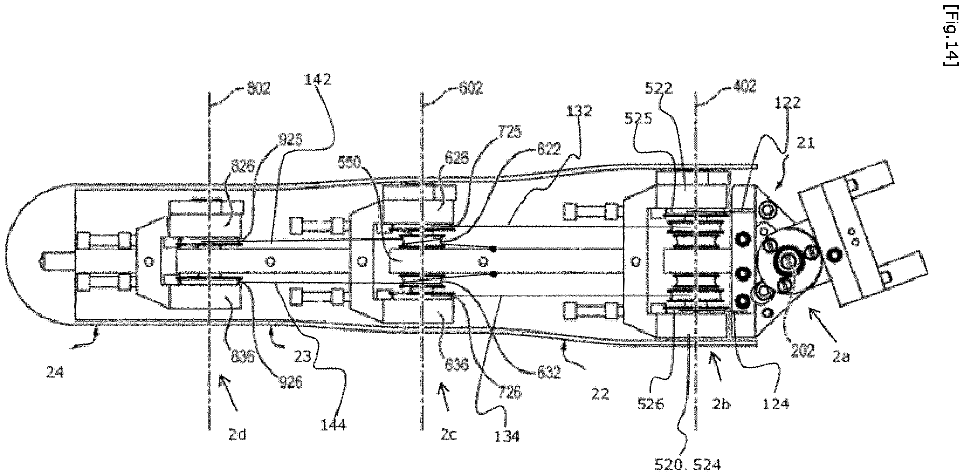

Les demi-arbres portent chacun un roulement 426, 436 agencé pour réaliser une articulation de pivotement du deuxième élément de structure (non représenté), ou de la première phalange 22, par rapport à l'élément de structure de liaison 21 de sorte que la première phalange pivote relativement audit élément de structure de liaison 21. Les roulements 426, 436 forment paliers de guidage à rotation pour une chape 520 (représentée en figure 14) de la première phalange 22.

Le demi-arbre 420 porte deux poulies de réception, dites aussi poulies de renvoi 422, 424 sur lesquelles des liens souples d'entraînement ou câbles sont respectivement prévus pour être enroulés en parcourant un tour de ces poulies. L'autre demi-arbre 430 porte deux autres poulies de renvoi 432, 434 sur lesquelles des liens souples ou câbles sont respectivement prévus pour être enroulés en parcourant un tour de ces poulies. Les poulies de renvoi 422, 424 et 432, 434 sont libres de rotation par rapport au pontet 320 autour de l'axe 402.

Le tour mort des câbles réalisé autour des poulies de renvoi 422, 424 et 432, 434 de guidage, libres en rotation autour de leur axe, permet d'interdire que des câbles ne sortent des poulies en fonction de la configuration articulaire du mouvement de flexion-extension des phalanges.

Les poulies de renvoi permettent de renvoyer respectivement quatre câbles provenant des cages 222 et/ou 232 vers des articulations avales de flexion-extension de la phalange intermédiaire 23.

La figure 14 montre un mode de réalisation d'une structure articulée ou doigt. Comme indiqué précédemment, tous les doigts de la main robotique sont fonctionnellement similaires à l'exception du majeur 3 qui ne comprend pas d'articulation d'abduction-adduction. Pour ce qui suit et pour éviter des répétitions, une seule structure articulée est décrite, en utilisant les références de l'index 2. La structure articulée 2 comprend quatre éléments de structure : un élément de structure de liaison 21 et trois phalanges 22, 23 et 24. De préférence, la structure articulée est actionnée par seulement trois actionneurs (décrits par la suite). Chaque élément de structure est mis en mouvement par l'intermédiaire du mécanisme d'entraînement comprenant des poulies de réception et par plusieurs couples de deux liens souples d'entraînement ou câbles 112, 114 ; 122, 124 ; 132, 134 et 142, 144.

Les deux branches 522, 524 de la chape 520 de la première phalange 22 portent des poulies de réception 525, 526 centrées sur l'axe 402, lesdites poulies guidant la seconde extrémité respective des câbles 122, 124 qui permettent de mettre en mouvement la première articulation d'abduction-adduction 2b.

Les poulies 525, 526 doivent être liées à rotation avec la chape 520 si les extrémités des câbles 122, 124 sont fixées sur ces poulies.

Les poulies 525 et 526 peuvent être libres à rotation par rapport à la chape 520, autour de l'axe 402 si les extrémités des câbles 122, 124 sont fixées non pas sur les poulies précitées mais sur la chape 520.

Les deux branches 626, 636 de la deuxième phalange 23 portent des poulies de réception 725, 726 centrées sur l'axe 602, lesdites poulies guidant la seconde extrémité respective des câbles 132, 134 qui permettent de mettre en mouvement la deuxième articulation d'abduction-adduction 2c.

Les deux branches 826, 836 de la troisième phalange 24 portent des poulies de réception 925, 926 centrées sur l'axe 802, lesdites poulies guidant la seconde extrémité respective des câbles de raccordement 142, 144 qui permettent de mettre en mouvement la troisième articulation d'abduction-adduction 2d.

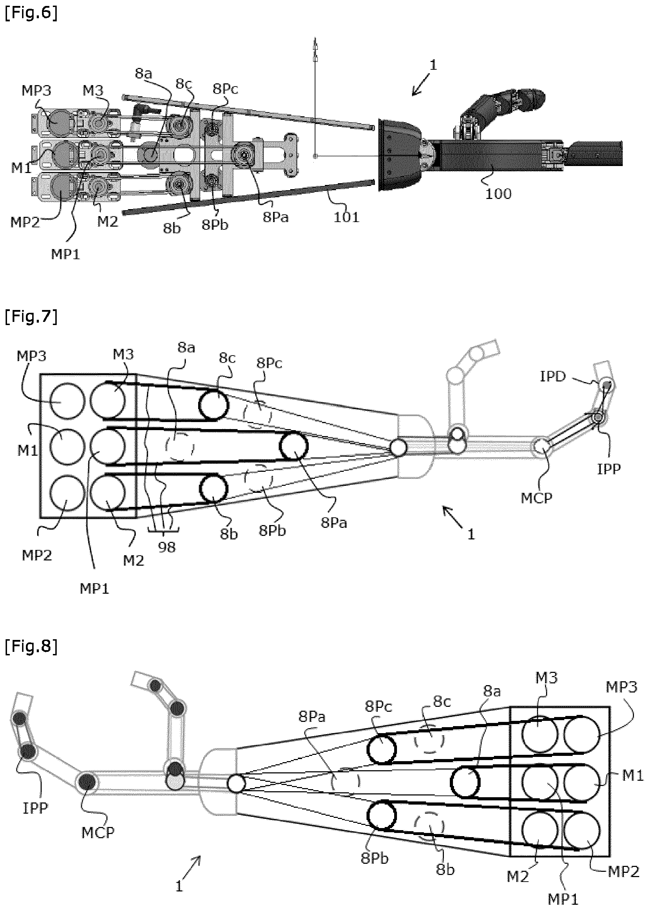

Selon un mode de réalisation, les premières extrémités des câbles 142, 144 sont fixées à la première phalange 22 en amont de l'articulation 2c. Ensuite les câbles 142, 144 sont enroulés respectivement autour des poulies 622, 632 centrées sur l'axe 602. Les poulies de réception 622, 632 sont libres en rotation autour de l'axe 602. Le sens d'enroulement du câble 144 autour de la poulie 632 s'effectue dans un sens inverse du sens d'enroulement du câble 142 autour de la poulie 622. En outre, les câbles 142 et 144 se croisent avant d'atteindre les poulies 925, 926 ; le croisement des câbles 142 et 144 est visible sur la figure 7 mais non visible sur la figure 14. Lors de l'entraînement de l'articulation 2c (ou du pivotement de la phalange 23 relativement à la phalange 22) et du fait de la traction exercée par l'un ou l'autre des câbles 142 ou 144, les poulies 925, 926 sont entraînées en pivotement de manière à entraîner en mouvement l'articulation 2d. Ce mode de réalisation permet d'éviter l'utilisation d'un actionneur, en utilisant un seul actionneur pour deux articulations.

On va maintenant décrire les moyens d'actionnement et d'entraînement, ou transmission de mouvement, permettant de mettre en mouvement les structures articulées de la main robotique.

En référence aux figures 6, 7 et 8, le dispositif formant une main robotique comprend six actionneurs M1, M2, M3, MP1, MP2 et MP3 pour l'actionnement de toutes les articulations. Les six actionneurs comprennent des moteurs électriques, de préférence des motoréducteurs. L'actionneur M1 est agencé pour actionner les articulations du rang d'articulations d'abduction-adduction. L'actionneur M2 est agencé pour actionner les articulations du rang d'articulations métacarpo phalangienne. L'actionneur M3 est agencé pour actionner les articulations du rang d'articulations interphalangienne proximale. L'actionneur MP1 est agencé pour actionner l'articulation d'abduction-adduction du pouce 5. L'actionneur MP2 est agencé pour actionner la première articulation de flexion-extension du pouce 5. L'actionneur MP3 est agencé pour actionner la deuxième articulation de flexion-extension du pouce 5. Les six actionneurs s'étendent horizontalement et sont superposés les uns au-dessus des autres selon deux colonnes de trois actionneurs superposés. Cette caractéristique permet d'améliorer la compacité du dispositif formant une main robotique.

Le dispositif 1 formant une main robotique comprend en outre six arbres intermédiaires d'entraînement 8a, 8b, 8c, 8Pa, 8Pb, 8Pc. Les arbres intermédiaires d'entraînement comprennent des poulies d'entraînement. Ils participent avec les liens souples d'entraînement à transmettre les mouvements de rotation des actionneurs aux poulies de réception des articulations, de manière à mettre mouvement la main robotique. En particulier, chaque arbre intermédiaire d'entraînement 8a, 8b, 8c, 8Pa, 8Pb, 8Pc est actionné par un seul actionneur. En référence aux figures 6, 7 et 8, l'actionneur M1 est associé à l'arbre intermédiaire d'entraînement 8a, l'actionneur M2 est associé à l'arbre intermédiaire d'entraînement 8b, l'actionneur M3 est associé à l'arbre intermédiaire d'entraînement 8c, l'actionneur MP1 est associé à l'arbre intermédiaire d'entraînement 8Pa, l'actionneur MP2 est associé à l'arbre intermédiaire d'entraînement 8Pb, l'actionneur MP3 est associé à l'arbre intermédiaire d'entraînement 8Pc. Chaque actionneur est relié à son arbre intermédiaire d'entraînement au moyen d'un lien souple d'actionnement 98, par exemple une courroie. Par exemple, chaque actionneur et chaque arbre intermédiaire d'entraînement porte respectivement une poulie ou une roue dentée afin de coopérer avec un lien souple d'actionnement et ainsi transmettre le mouvement de rotation de l'actionneur à l'arbre intermédiaire d'entraînement. Les arbres intermédiaires d'entraînement s'étendent sensiblement parallèlement entre eux et parallèlement aux actionneurs. Ils sont disposés les uns à côté des autres de sorte que leur positionnement, vu latéralement, forme un triangle ou un losange et permette un encombrement moindre en hauteur. Cette caractéristique permet de conférer au support d'actionnement un encombrement général ressemblant à un avant-bras humain. Vu de haut, les six arbres intermédiaires d'entraînement sont disposés de manière à former quatre colonnes ou quatre rangées : R1, R2, R3 et R4, voir la figure 5. La rangée R1 comprend l'arbre intermédiaire d'entraînement 8a. La rangée R2 comprend les arbres intermédiaires d'entraînement 8b et 8c superposés. La rangée R3 comprend les arbres intermédiaires d'entraînement 8Pb et 8Pc superposés. La rangée R4 comprend l'arbre intermédiaire d'entraînement 8Pa.

En référence aux figures 4, 5, 6, 7, 8, les actionneurs et les arbres intermédiaires d'entraînement sont disposés tête-bêche. Le long de chaque côté latéral du support d'actionnement 101, trois actionneurs sont reliés avec trois arbres intermédiaires respectifs au moyen d'un lien souple d'actionnement 98, voir figures 7 et 8.

Les arbres intermédiaires d'entraînement sont reliés aux articulations des structures articulées par l'intermédiaire de liens souples d'entraînement ou câbles 96 déjà décrits.

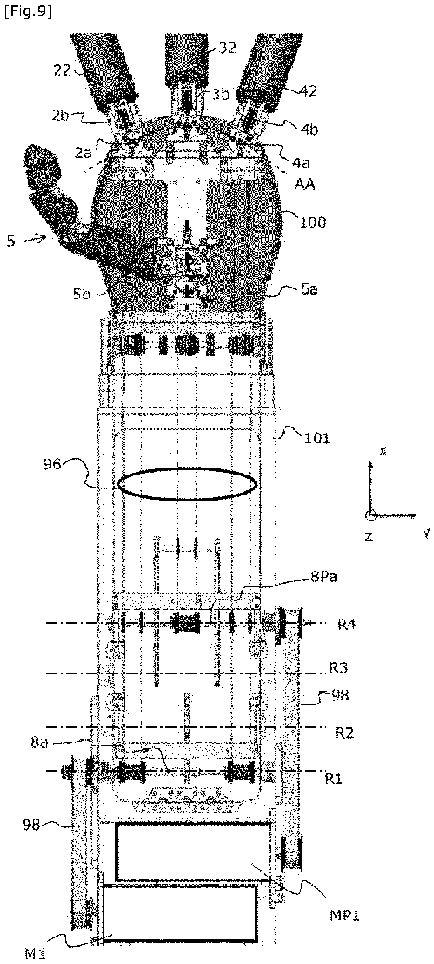

Chaque arbre intermédiaire d'entraînement 8a, 8b, 8c est relié à un seul rang d'articulations ; les autres arbres intermédiaires d'entraînement 8Pa, 8Pb, 8Pc sont chacun reliés à une seule articulation. En référence à la figure 9, l'arbre intermédiaire d'entraînement 8a est relié au rang d'articulations d'abduction-adduction AA comprenant les articulations 2a et 4a des phalanges 22 et 42. L'arbre intermédiaire d'entraînement 8a porte deux poulies d'entraînement présentant chacune deux points d'ancrage pour deux liens souples d'entraînement, lesdits deux liens souples étant raccordés à des poulies de réception 325, 326 décrites précédemment. Afin d'obtenir un rapprochement ou un écartement synchronisé de l'index et de l'annulaire, les liens souples d'entraînement raccordés à l'arbre 8a doivent être disposés de manière symétrique par rapport à un plan géométrique médian longitudinal parallèle à un plan xz. En outre visible sur la figure 9, l'arbre intermédiaire d'entraînement 8Pa est relié à l'articulation d'abduction-adduction 5a du pouce. L'arbre 8Pa porte une poulie d'entraînement présentant deux points d'ancrage pour deux liens souples d'entraînement qui sont raccordés à des poulies de réception 325, 326 décrites précédemment.

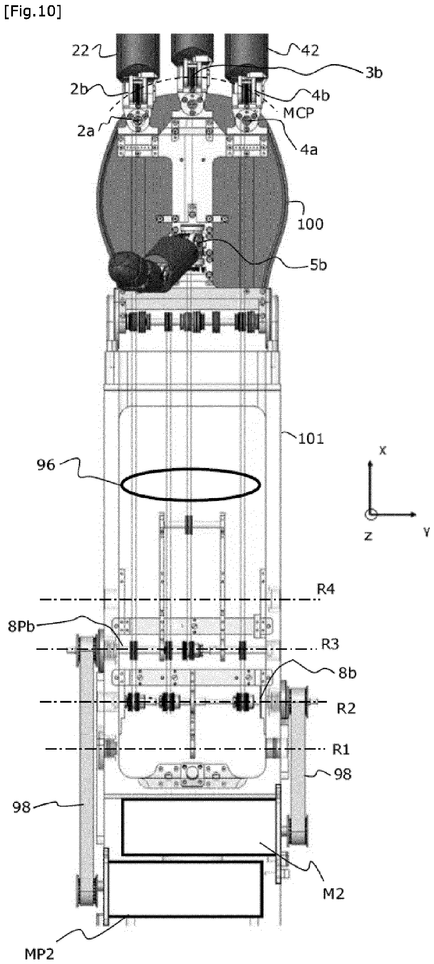

En référence à la figure 10, l'arbre intermédiaire d'entraînement 8b est relié au rang d'articulations métacarpo phalangienne MCP 2b, 3b et 4b des phalanges 22, 32 et 42. L'arbre 8b porte trois poulies d'entraînement présentant chacune deux points d'ancrage pour deux liens souples d'entraînement, lesdits deux liens souples étant raccordés à des poulies de réception 525, 526 décrites précédemment. En outre visible sur la figure 10, l'arbre intermédiaire d'entraînement 8Pb est relié à l'articulation de flexion-extension 5b du pouce. L'arbre 8Pb porte une poulie d'entraînement présentant deux points d'ancrage pour deux liens souples d'entraînement qui sont raccordés à des poulies de réception 525, 526 décrites précédemment.

En référence à la figure 11, l'arbre intermédiaire d'entraînement 8c est relié au rang d'articulations interphalangienne proximale IPP comprenant les articulations 2c, 3c, 4c des phalanges 23, 33 et 43. L'arbre 8c porte trois poulies d'entraînement présentant chacune deux points d'ancrage pour deux liens souples d'entraînement, lesdits deux liens souples étant raccordés à des poulies de réception 725, 726 décrites précédemment. En outre visible sur la figure 11, l'arbre intermédiaire d'entraînement 8Pc est relié à l'articulation de flexion-extension 5c du pouce. L'arbre 8Pc porte une poulie d'entraînement présentant deux points d'ancrage pour deux liens souples d'entraînement qui sont raccordés à des poulies de réception 725, 726 décrites précédemment.

Enfin, l'actionnement de l'arbre intermédiaire d'entraînement 8c permet en outre d'actionner le rang d'articulations interphalangienne distale IPD comprenant les articulations 2d, 3d, 4d par l'intermédiaire des liens souples de raccordement ou câbles 142, 144 décrits précédemment. De même, l'arbre intermédiaire d'entraînement 8Pc permet d'actionner l'articulation 5d par l'intermédiaire des liens souples de raccordement 142, 144 décrits précédemment. Cette caractéristique permet de synchroniser le mouvement angulaire des articulations 2d, 3d, 4d, 5d avec le mouvement angulaire des articulations 2c, 3c, 4c, 5c.

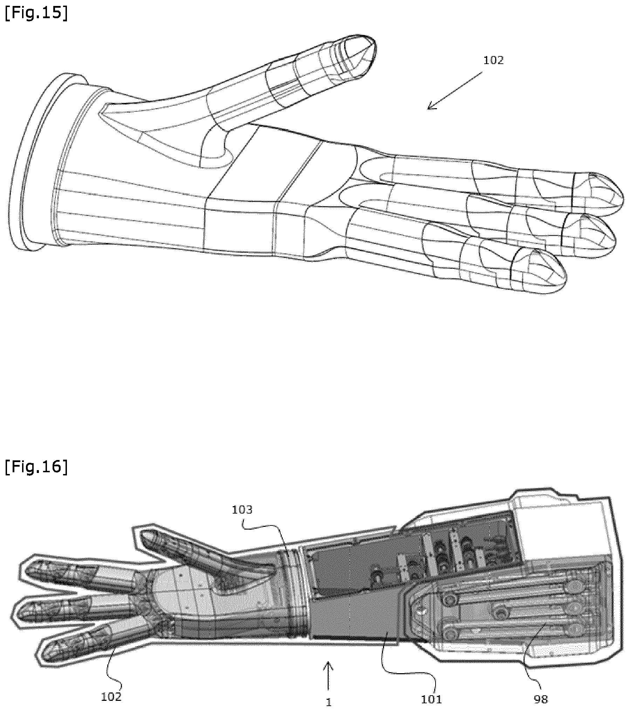

Dans le cadre d'une utilisation en milieu aquatique en grande profondeur, le dispositif 1 formant une main robotique comprend un gant 102 destiné à recouvrir tous les doigts 2, 3, 4 et 5 et l'embase 100, voir figure 15. En référence à la figure 16, lorsque le gant 102 est disposé sur le dispositif, l'extrémité proximale dudit gant est appliquée sur l'extrémité distale du support d'actionnement 101 de manière à fermer le gant et obtenir une étanchéité entre le volume emprisonné par le gant et le milieu extérieur. De préférence le gant est fixé sur le support d'actionnement 101 par collier de serrage 103. Le volume compris entre l'embase et les doigts et la paroi intérieure du gant est rempli d'un fluide incompressible, de préférence de l'huile diélectrique. Cette caractéristique permet de mettre le dispositif 1 en équipression entre l'intérieur et l'extérieur du gant. De plus, le gant a pour avantages d'être léger et de ne pas limiter les mouvements des doigts. Selon un mode de réalisation, le gant peut présenter des soufflets à l'arrière des doigts au niveau des articulations.

Entre outre la partie du support d'actionnement 101 renfermant les arbres intermédiaires est également fermée et remplie d'huile diélectrique. L'huile permet en outre de limiter le frottement entre les liens souples d'entraînement, ou câbles, et les poulies de manière que l'allongement mesuré résulte seulement, ou majoritairement de l'effort de saisie. Selon un mode de réalisation, le support d'actionnement 101 comprend deux parties : une partie arbres intermédiaires et une partie actionneurs qui sont étanches l'une par rapport à l'autre et étanches par rapport au milieu extérieur. La partie actionneurs du support d'actionnement renferme les moteurs électriques et les liens souples d'actionnement 98, ou courroies, et est remplie d'air. Le boîtier formant le support d'actionnement est constitué de matériaux et de pièces du type agencé et configuré pour l'immersion en milieu aquatique en grande profondeur connu par la personne du métier. De même, les moyens d'étanchéité, par exemple joints, sont du type agencé et configuré pour l'immersion en milieu aquatique en grande profondeur connu par la personne du métier.

De préférence et en référence aux figures 3 et 4, le dispositif formant une main robotique comprend plusieurs coques, ou capots, entourant les doigts et l'embase, de manière à réaliser localement un support pour la paroi du gant. Les coques sont des pièces rigides, par exemple en matière plastique. En référence à la figure 3, chaque doigt présente trois coques de doigt 104, ou capots, chaque coque 104 entourant une phalange. De préférence, les coques de doigt présentent une forme arrondie. Les coques de doigt 104 des premières phalanges et des deuxièmes phalanges sont placées entre chaque articulation de ces dernières, sans recouvrir totalement lesdites articulations de manière à permettre le mouvement des phalanges. Les troisièmes phalanges comprennent également respectivement une coque de doigt 104 qui ne recouvre pas l'articulation commune avec la deuxième phalange. En référence à la figure 4, l'embase comprend une coque d'embase 105 recouvrant la face de paume 150 et la face opposée à la face de paume, sans recouvrir les articulations d'abduction-adduction. Selon un mode de réalisation, les coques de doigt 104 et d'embase 105 peuvent être réalisées en deux parties qui peuvent s'assembler par vissage ou emboîtageFfigur.

Le calcul de l'effort de serrage va maintenant être décrit.

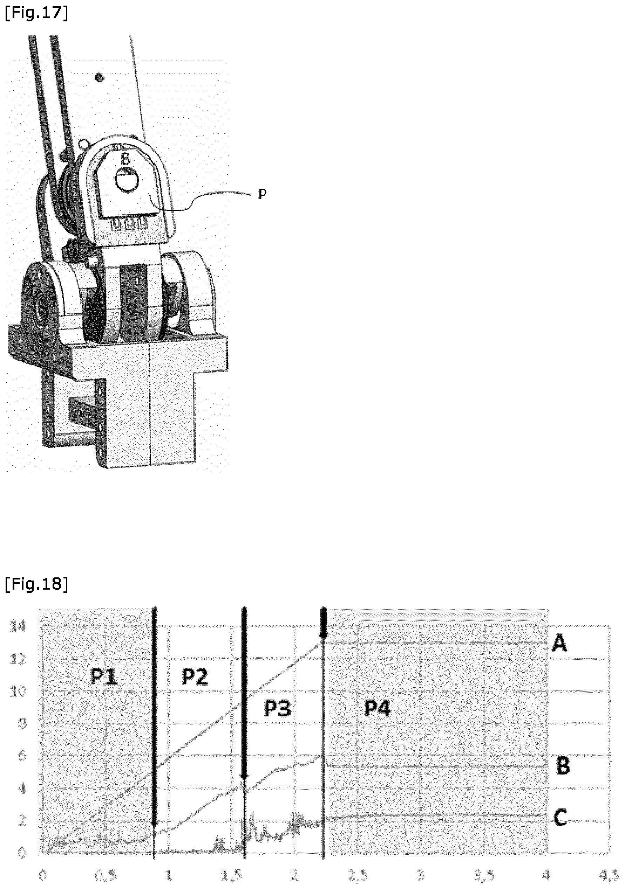

Le dispositif formant une main robotique 1 comprend des moyens de mesure afin de déterminer l'allongement des liens souples d'entraînement ou câbles. Les moyens de mesure mesurent le débattement angulaire des axes des actionneurs et des axes des articulations. Selon le mode de réalisation décrit, les moyens de mesure comprennent six codeurs incrémentaux, ou capteurs optiques, chacun étant disposé sur un axe moteur (non représenté), et quinze potentiomètres P, chacun disposé sur une articulation afin de mesurer le débattement angulaire entre deux phalanges, voir figure 17.

Pour une articulation, la différence angulaire entre la mesure d'un codeur et la mesure du potentiomètre associé à ladite articulation permet de déduire l'allongement du câble. Par exemple en référence à la figure 14, les câbles 132, 134 actionnant l'articulation inter-phalangienne proximale 2c coopèrent respectivement avec une poulie intermédiaire située au niveau de l'axe 402 de l'articulation métacarpo-phalangienne 2b, ce qui entraine un couplage entre ces deux articulations. Afin de prendre en compte ce couplage, mais aussi les éventuelles différences de diamètre entre la poulie intermédiaire (motrice) et la poulie réceptrice qu'elle entraine, il est nécessaire de déterminer la matrice de couplage tenant compte des diamètres des poulies.

En considérant que chaque câble se comporte comme un ressort linéaire, et connaissant la constante d'élasticité (constante ou coefficient de raideur, noté k) du câble, il est possible de calculer l'effort de traction (noté F) subi par le câble par l'équation : F=k.x ; x étant l'allongement calculé. En tenant compte de la matrice de couple, des différentes articulations et des diamètres des poulies, il est possible de calculer l'effort de serrage produit par le dispositif 1. Les calculs d'allongement et d'efforts sont effectués par des moyens de commande non représentés.

De préférence, les liens souples d'entraînement ou câbles sont des fils thermoplastiques, par exemple comprenant un matériau polymère, dont l'allongement est reproductible. Par exemple, les liens souples d'entraînement ou câbles sont constitués du matériau « vectran » et présentent un diamètre de 0,7 millimètre. Le coefficient de raideur est par exemple de 15000 N/m.

La figure 18 caractérise un essai de saisie d'un objet, saisie décomposée en quatre phases, et présente trois courbes : la courbe B montre l'évolution de la somme quadratique des allongements des quatre câbles de l'index 2, la courbe C montre l'évolution de la somme quadratique des allongements des quatre câbles du pouce 5, et la courbe A montre l'évolution de la position angulaire de l'articulation MCP (flexion-extension 2b) de l'index. Lors de cet essai, cette articulation était la seule à être en mouvement.

Pendant une première phase, dite phase d'approche P1, la première phalange pivote et les allongements sont nuls ou négligeables jusqu'au contact de l'index avec l'objet. Pendant une deuxième phase, dite phase de contact P2, la première phalange continue de pivoté à une vitesse linéaire et la somme quadratique des allongements de l'index augmente du fait que le contact avec l'objet se prolonge par un appui croissant sur ledit objet. Cette deuxième phase se termine par l'accroissement de la somme quadratique des allongements du pouce depuis une valeur quasi-nulle, correspondant au contact du pouce avec l'objet. Puis, pendant une troisième phase dite phase de serrage P3, la première phalange continue toujours de pivoté à une vitesse linéaire et les sommes quadratiques des allongements de l'index et du pouce augmentent respectivement de manière que les deux doigts appuient sur ledit objet et exercent un effort croissant sur celui-ci. Cette troisième phase se termine par l'arrêt du déplacement de la première phalange. Enfin, pendant une quatrième phase dite phase de saisie P4, la première phalange reste immobile et les sommes quadratiques des allongements de l'index et du pouce respectivement constantes.

Grâce à la mesure des allongements des câbles, il est possible de détecter le contact d'un objet par un ou plusieurs doigts successivement ou simultanément, et d'évaluer l'effort de serrage dudit objet. La valeur des sommes quadratiques des allongements des câbles lors de cette phase de serrage, et connaissant la constante d'élasticité (ou de traction) permettent de déterminer les efforts appliqués par chacun des doigts sur l'objet considéré.

Cette méthode a pour avantage de s'affranchir de capteurs ne résistant pas à la pression et de ne pas être limité par la profondeur d'immersion.

## Revendications

1. Dispositif (1) formant une main robotique, **caractérisé en ce qu'**il comprend :
- une embase (100) formant une paume de main,
- au moins deux structures articulées (2, 3, 4, 5) formant chacune un doigt robotique, chaque structure articulée étant reliée fonctionnellement à l'embase et comprenant au moins une articulation (2a, 2b, 2c, 2d, 3b, 3c, 3d, 4a, 4b, 4c, 4d), de manière à mettre en mouvement ladite structure articulée par rapport à l'embase,
- au moins un mécanisme d'entraînement pour mettre en mouvement chaque articulation,
- au moins un actionneur (M1, M2, M3, MP1, MP2, MP3) agencé pour actionner l'au moins un mécanisme d'entraînement au moyen au moins d'un lien souple d'entraînement (96) reliant et entraînant l'au moins un mécanisme d'entraînement,
- des moyens de mesure du pivotement de l'au moins un actionneur et d'une ou de plusieurs desdites articulations,
- un gant (102) recouvrant l'embase (100) et les au moins deux structures articulées (2, 3, 4, 5), le gant étant fermé de manière à former, à l'intérieur dudit gant, un volume rempli d'huile entre la paroi du gant et l'embase (100) et les au moins deux structures articulées (2, 3, 4, 5).

2. Dispositif (1) selon la revendication 1, **caractérisé en ce que** les moyens de mesure comprennent un codeur incrémental disposé sur chaque actionneur.

3. Dispositif (1) selon la revendication 1 ou 2, **caractérisé en ce que** les moyens de mesure comprennent un potentiomètre (P) disposé sur chaque axe d'articulation.

4. Dispositif (1) selon l'une quelconque des revendications 1 à 3, **caractérisé en ce que** le gant est réalisé avec un matériau contenant du silicone.

5. Dispositif (1) selon l'une quelconque des revendications 1 à 4, **caractérisé en ce qu'**il comprend au moins une coque présentant une forme arrondie et placée entre chaque articulation de l'au moins une structure articulée, de manière à réaliser localement un support pour la paroi du gant.

6. Dispositif (1) selon l'une quelconque des revendications 1 à 5, **caractérisé en ce qu'**il comprend au moins un arbre intermédiaire d'entraînement (8a, 8b, 8c, 8Pa, 8Pb, 8Pc) afin de renvoyer le mouvement de l'au moins un actionneur (M1, M2, M3), disposé fonctionnellement entre l'au moins un actionneur et l'au moins un mécanisme d'entraînement actionné, de façon que :
- l'au moins un arbre intermédiaire d'entraînement (8a, 8b, 8c) est actionné par un actionneur (M1, M2, M3), et
- l'au moins un arbre intermédiaire d'entraînement (8a, 8b, 8c) est relié fonctionnellement à au moins deux mécanismes d'entraînement distincts, chaque mécanisme d'entraînement étant relié fonctionnellement audit arbre intermédiaire d'entraînement (8a, 8b, 8c) au moyen de l'au moins un lien souple d'entraînement (96).

7. Dispositif (1) selon la revendication 6, **caractérisé en ce qu'**au moins un arbre intermédiaire d'entraînement (8a, 8b, 8c) est relié fonctionnellement à au moins deux mécanismes d'entraînement, chaque mécanisme étant disposé fonctionnellement sur une structure articulée distincte (2, 3, 4, 5).

8. Dispositif (1) selon la revendication 6, **caractérisé en ce que** les au moins deux structures articulées (2, 3, 4, 5) comprennent chacune au moins deux éléments de structure (21, 22, 23, 24, 32, 33, 34, 41, 42, 43, 44, 51, 52, 53, 54) et au moins deux articulations (2a, 2b, 2c, 2d, 3b, 3c, 3d, 4a, 4b, 4c, 4d, 5a, 5b, 5c, 5d) de différents types et/ou de différentes fonctions, qui sont reliés fonctionnellement ensemble pour former un doigt robotique à au moins deux articulations, et **en ce que** l'au moins un arbre intermédiaire d'entraînement (8a, 8b, 8c) est relié fonctionnellement à au moins deux mécanismes d'entraînement associés à une articulation de même type et/ou fonction, chaque mécanisme étant disposé sur une structure articulée distincte.

9. Dispositif (1) selon l'une quelconque des revendications 6 à 8, **caractérisé en ce que** l'au moins un actionneur (M1, M2, M3, MP1, MP2, MP3) comprend un axe de rotation qui est parallèle et non coaxial avec l'axe de l'au moins un arbre intermédiaire d'entraînement (8a, 8b, 8c, 8Pa, 8Pb, 8Pc), de façon que chaque arbre intermédiaire d'entraînement est actionné par un actionneur (M1, M2, M3, MP1, MP2, MP3) au moyen d'au moins un lien souple d'actionnement (98).

10. Dispositif (1) selon l'une quelconque des revendications 6 à 9, **caractérisé en ce que** l'au moins un arbre intermédiaire d'entraînement (8a, 8b, 8c, 8Pa, 8Pb, 8Pc) comprend au moins une poulie d'entraînement et l'au moins un mécanisme d'entraînement comprend au moins une poulie de réception , de façon que l'au moins un lien souple d'entraînement (96) est relié auxdites poulies .

11. Dispositif (1) selon l'une quelconque des revendications 6 à 10, **caractérisé en ce qu'**il comprend un support (101) sur lequel l'au moins un actionneur (M1, M2, M3, MP1, MP2, MP3) et l'au moins un arbre intermédiaire d'entraînement (8a, 8b, 8c, 8Pa, 8Pb, 8Pc) sont fixés, le support étant relié fonctionnellement à l'embase (100).

12. Robot comprenant au moins un bras articulé, lequel comprenant au moins un dispositif (1) formant une main robotique selon l'une quelconque des revendications précédentes.

## Patentansprüche

1. Vorrichtung (1), die eine Roboterhand bildet, **dadurch gekennzeichnet, dass** sie umfasst:
- einen Sockel (100), der eine Handfläche bildet,
- mindestens zwei gelenkige Strukturen (2, 3, 4, 5), die jeweils einen Roboterfinger bilden, wobei jede gelenkige Struktur betrieblich mit dem Sockel verbunden ist, und mindestens ein Gelenk (2a, 2b, 2c, 2d, 3b, 3c, 3d, 4a, 4b, 4c, 4d) umfasst, um die gelenkige Struktur in Bezug auf den Sockel in Bewegung zu versetzen,
- mindestens einen Antriebsmechanismus um jedes Gelenk in Bewegung zu versetzen,
- mindestens einen Stellantrieb (M1, M2, M3, MP1, MP2, MP3), der ausgeführt ist, um den mindestens einen Antriebsmechanismus anhand mindestens einer biegsamen Antriebsverbindung (96), die den mindestens einen Antriebsmechanismus verbindet und antreibt, zu betätigen,
- Mittel zum Messen des Schwenks des mindestens einen Stellantriebs und eines oder mehrerer der Gelenke,
- einen Handschuh (102), der den Sockel (100) und die mindestens zwei gelenkigen Strukturen (2, 3, 4, 5) abdeckt, wobei der Handschuh derart geschlossen ist, um im Inneren des Handschuhs ein mit Öl gefülltes Volumen zwischen der Wand des Handschuhs und dem Sockel (100) und den mindestens zwei gelenkigen Strukturen (2, 3, 4, 5) zu bilden.

2. Vorrichtung (1) nach Anspruch 1, **dadurch gekennzeichnet, dass** die Mittel zum Messen einen Inkrementalgeber umfassen, der auf jedem Stellantrieb angeordnet ist.

3. Vorrichtung (1) nach Anspruch 1 oder 2, **dadurch gekennzeichnet, dass** die Mittel zum Messen ein Potentiometer (P) umfassen, das auf jeder Gelenkachse angeordnet ist.

4. Vorrichtung (1) nach einem der Ansprüche 1 bis 3, **dadurch gekennzeichnet, dass** der Handschuh aus einem Werkstoff hergestellt ist, der Silikon enthält.

5. Vorrichtung (1) nach einem der Ansprüche 1 bis 4, **dadurch gekennzeichnet, dass** sie mindestens eine Schale umfasst, die abgerundete Form aufweist, und zwischen jedem Gelenk der mindestens einen gelenkigen Struktur platziert ist, um lokal eine Stütze für die Wand des Handschuhs herzustellen.

6. Vorrichtung (1) nach einem der Ansprüche 1 bis 5, **dadurch gekennzeichnet, dass** sie mindestens eine Zwischenantriebswelle (8a, 8b, 8c, 8Pa, 8Pb, 8Pc) umfasst, um die Bewegung des mindestens einen Stellantriebs (M1, M2, M3) umzulenken, die betrieblich zwischen dem mindestens einen Stellantrieb und dem mindestens einen betätigten Antriebsmechanismus angeordnet ist, sodass:
- die mindestens eine Zwischenantriebswelle (8a, 8b, 8c) durch einen Stellantrieb (M1, M2, M3) betätigt wird, und
- die mindestens eine Zwischenantriebswelle (8a, 8b, 8c) betrieblich mit mindestens zwei eigenen Antriebsmechanismen verbunden ist, wobei jeder Antriebsmechanismus anhand der mindestens einen biegsamen Antriebsverbindung (96) betrieblich mit der Zwischenantriebswelle (8a, 8b, 8c) verbunden ist.

7. Vorrichtung (1) nach Anspruch 6, **dadurch gekennzeichnet, dass** mindestens eine Zwischenantriebswelle (8a, 8b, 8c) betrieblich mit mindestens zwei Antriebsmechanismen verbunden ist, wobei jeder Mechanismus betrieblich auf einer eigenen gelenkigen Struktur (2, 3, 4, 5) angeordnet ist.

8. Vorrichtung (1) nach Anspruch 6, **dadurch gekennzeichnet, dass** die mindestens zwei gelenkigen Strukturen (2, 3, 4, 5) jeweils mindestens zwei Strukturelemente (21, 22, 23, 24, 32, 33, 34, 41, 42, 43, 44, 51, 52, 53, 54) und mindestens zwei Gelenke (2a, 2b, 2c, 2d, 3b, 3c, 3d, 4a, 4b, 4c, 4d, 5a, 5b, 5c, 5d) in unterschiedlichen Arten und/oder mit unterschiedlichen Funktionen umfassen, die betrieblich miteinander verbunden sind, um einen Roboterfinger mit mindestens zwei Gelenken zu bilden, und dadurch, dass die mindestens eine Zwischenantriebswelle (8a, 8b, 8c) betrieblich mit mindestens zwei Antriebsmechanismen verbunden ist, die mit einem Gelenk einer selben Art und/oder Funktion verknüpft sind, wobei jeder Mechanismus auf einer eigenen gelenkigen Struktur angeordnet ist.

9. Vorrichtung (1) nach einem der Ansprüche 6 bis 8, **dadurch gekennzeichnet, dass** der mindestens eine Stellantrieb (M1, M2, M3, MP1, MP2, MP3) eine Drehachse umfasst, die parallel und nicht koaxial zur Achse der mindestens einen Zwischenantriebswelle (8a, 8b, 8c, 8Pa, 8Pb, 8Pc) ist, damit jede Zwischenantriebswelle durch einen Stellantrieb (M1, M2, M3, MP1, MP2, MP3) anhand mindestens einer biegsamen Betätigungsverbindung (98) betätigt wird.

10. Vorrichtung (1) nach einem der Ansprüche 6 bis 9, **dadurch gekennzeichnet, dass** die mindestens eine Zwischenantriebswelle (8a, 8b, 8c, 8Pa, 8Pb, 8Pc) mindestens eine Antriebsrolle umfasst, und der mindestens eine Antriebsmechanismus mindestens eine Aufnahmerolle umfasst, damit die mindestens eine biegsame Antriebsverbindung (96) mit den Rollen verbunden ist.

11. Vorrichtung (1) nach einem der Ansprüche 6 bis 10, **dadurch gekennzeichnet, dass** sie einen Träger (101) umfasst, auf dem der mindestens eine Stellantrieb (M1, M2, M3, MP1, MP2, MP3) und die mindestens eine Zwischenantriebswelle (8a, 8b, 8c, 8Pa, 8Pb, 8Pc) befestigt sind, wobei der Träger betrieblich mit dem Sockel (100) verbunden ist.

12. Roboter, umfassend mindestens einen gelenkigen Arm, welcher mindestens eine Vorrichtung (1) umfasst, die eine Roboterhand nach einem der vorstehenden Ansprüche bildet.

## Claims

1. A device (1) forming a robotic hand, **characterised in that** it comprises:
- a base (100) forming a palm of a hand,
- at least two articulated structures (2, 3, 4, 5) each forming a robotic finger, each articulated structure being operatively connected to the base and comprising at least one articulation (2a, 2b, 2c, 2d, 3b, 3c, 3d, 4a, 4b, 4c, 4d), so as to set said articulated structure into motion relative to the base,
- at least one drive mechanism for setting each articulation into motion,
- at least one actuator (M1, M2, M3, MP1, MP2, MP3) arranged to actuate the at least one drive mechanism by means of at least one flexible drive link (96) connecting and driving the at least one drive mechanism,
- means for measuring pivoting of the at least one actuator and one or more of said articulations,
- a glove (102) covering the base (100) and the at least two articulated structures (2, 3, 4, 5), the glove being closed so as to form, inside said glove, a volume filled with oil between the wall of the glove and the base (100) and the at least two articulated structures (2, 3, 4, 5).

2. The device (1) according to claim 1, **characterised in that** the measuring means comprise an incremental encoder arranged on each actuator.

3. The device (1) according to claim 1 or 2, **characterised in that** the measuring means comprise a potentiometer (P) arranged on each articulation axis.

4. The device (1) according to any one of claims 1 to 3, **characterised in that** the glove is made of a material containing silicone.

5. The device (1) according to any one of claims 1 to 4, **characterised in that** it comprises at least one shell having a rounded shape and placed between each articulation of the at least one articulated structure, so as to locally form a support for the wall of the glove.

6. The device (1) according to any one of claims 1 to 5, **characterised in that** it comprises at least one intermediate drive shaft (8a, 8b, 8c, 8Pa, 8Pb, 8Pc) in order to transfer the movement of the at least one actuator (M1, M2, M3), operatively arranged between the at least one actuator and the at least one drive mechanism actuated, so that:
- the at least one intermediate drive shaft (8a, 8b, 8c) is actuated by an actuator (M1, M2, M3), and
- the at least one intermediate drive shaft (8a, 8b, 8c) is operatively connected to at least two distinct drive mechanisms, each drive mechanism being operatively connected to said intermediate drive shaft (8a, 8b, 8c) by means of the at least one flexible drive link (96).

7. The device (1) according to claim 6, **characterised in that** at least one intermediate drive shaft (8a, 8b, 8c) is operatively connected to at least two drive mechanisms, each mechanism being operatively arranged on a distinct articulated structure (2, 3, 4, 5).

8. The device (1) according to claim 6, **characterised in that** each of the at least two articulated structures (2, 3, 4, 5) comprises at least two structural elements (21, 22, 23, 24, 32, 33, 34, 41, 42, 43, 44, 51, 52, 53, 54) and at least two articulations (2a, 2b, 2c, 2d, 3b, 3c, 3d, 4a, 4b, 4c, 4d, 5a, 5b, 5c, 5d) of different types and/or functions, which are operatively connected together to form a robotic finger with at least two articulations, and **in that** the at least one intermediate drive shaft (8a, 8b, 8c) is operatively connected to at least two drive mechanisms associated with an articulation of the same type and/or function, each mechanism being arranged on a distinct articulated structure.

9. The device (1) according to any one of claims 6 to 8, **characterised in that** the at least one actuator (M1, M2, M3, MP1, MP2, MP3) comprises an axis of rotation which is parallel and non-coaxial with the axis of the at least one intermediate shaft drive (8a, 8b, 8c, 8Pa, 8Pb, 8Pc), so that each intermediate drive shaft is actuated by an actuator (M1, M2, M3, MP1, MP2, MP3) by means of at least one flexible actuating link (98).

10. The device (1) according to any one of claims 6 to 9, **characterised in that** the at least one intermediate drive shaft (8a, 8b, 8c, 8Pa, 8Pb, 8Pc) comprises at least one drive pulley and the at least one drive mechanism comprises at least one receiving pulley, so that the at least one drive flexible link (96) is connected to said pulleys.

11. The device (1) according to any one of claims 6 to 10, **characterised in that** it comprises a support (101) on which the at least one actuator (M1, M2, M3, MP1, MP2, MP3) and the at least one intermediate drive shaft (8a, 8b, 8c, 8Pa, 8Pb, 8Pc) are fastened, the support being operatively connected to the base (100).

12. A robot comprising at least one articulated arm, which comprises at least one device (1) forming a robotic hand according to any one of the preceding claims.
